Europäisches Patentamt

European Patent Office

Office européen des brevets

(19)

(11) Veröffentlichungsnummer: **0 041 058**
**B1**

(12) # EUROPÄISCHE PATENTSCHRIFT

(45) Veröffentlichungstag der Patentschrift:
18.03.87

(51) Int. Cl.⁴: **B 62 K 21/20**

(21) Anmeldenummer: **81890063.1**

(22) Anmeldetag: **13.04.81**

(54) **Befestigungsvorrichtung für die Lenker von Motorrädern od. dgl.**

(30) Priorität: **21.05.80 AT 2695/80**

(43) Veröffentlichungstag der Anmeldung:
**02.12.81 Patentblatt 81/48**

(45) Bekanntmachung des Hinweises auf die Patenterteilung:
**18.03.87 Patentblatt 87/12**

(84) Benannte Vertragsstaaten:
**BE DE FR IT**

(56) Entgegenhaltungen:
**DE-C-913 621**
**GB-A-13 837**
**GB-A-419 336**
**NL-C-72 403**
**US-A-2 396 041**

(73) Patentinhaber: **Steyr- Daimler- Puch
Aktiengesellschaft, Kärntnerring 7, A-1010 Wien
(AT)**

(72) Erfinder: **Resele, Peter, Dipl. Ing. Dr., St. Peter
Hauptstrasse 31e/10, A-8042 Graz (AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

EP 0 041 058 B1

**Beschreibung**

Die Erfindung bezieht sich auf eine Befestigungsvorrichtung für die Lenker von Motorrädern od. dgl., bei der der Lenker auf der oberen Gabelbrücke elastisch gelagert ist und der Lenker oder ein Auflagestück, an dem der Lenker angeschellt ist, wenigstens einen Haltearm besitzt.

Bei bekannten Motorrädern od. dgl. besitzt der Gabelkopf an seiner Oberseite meist wenigstens eine halbzylindrische Aussparung, die den rohrförmigen Lenker aufnimmt. Mittels wenigstens einer Schelle wird der Lenker in der Aussparung niedergespannt und festgeklemmt. Die Schelle kann auch als Instrumententräger ausgebildet sein. Auf diese Weise wird der Lenker zwar sicher gehalten, es werden aber auch alle vom Motor bzw. von der Fahrbahn her in den Rahmen und in weiterer Folge in den Gabelkopf eingeleiteten Schwingungen, gegebenenfalls sogar durch Resonanzerscheinungen verstärkt, in den Lenker und in die Hände des Fahrers übertragen. Dies kann erhebliche Komforteinbußen verursachen.

Es ist auch schon bekannt, die halbzylindrische Aussparung für den Lenker in einem gesonderten, mit dem Gabelkopf verschraubten Auflagestück vorzusehen. Die hierfür dienenden Befestigungsschrauben durchsetzen zylindrische oder kegelstumpfförmige Hülsen aus Gummi od. dgl., die in der oberen Gabelbrücke sitzen und einen direkten Kontakt zwischen Lenker und Gabelkopf unterbinden, so daß die Körperschallfortleitung verhindert ist. Bei dieser Befestigungsvorrichtung ist jedoch nachteilig, daß insbesondere bei Motorfahrrädern mit niedrig angeordnetem Gabelkopf und hochgezogenem Lenker starke Beanspruchungen der in geringem Abstand voneinander angeordneten Gummihülsen aus den Verzögerungs- und Beschleunigungskräften auftreten, was zu einer in Fahrtrichtung unzulässig nachgiebigen Lenkerposition führen kann. Daraus folgert dann eine unerwünschte Fahrunsicherheit.

Gemäß der GB-A-419 336 wurde auch schon vorgeschlagen, den Lenker unter Zwischenlage von Gummihülsen am Gabelkopf anzuschellen und ihn durch einen Haltearm in der Lenkebene zu stabilisieren. Dieser Haltearm ist vorwärts ausgerichtet, was eine entsprechende Baugröße verlangt. Außerdem ergibt sich nur eine Abfederung des Lenkers in vertikaler Richtung und horizontale Stöße gehen praktisch ungedämpft in den Lenker.

Der Erfindung liegt die Aufgabe zugrunde, diese Mängel zu beseitigen und eine Befestigungsvorrichtung der eingangs geschilderten Art zu schaffen, die mit einfacher, platzsparender Konstruktion eine insbesondere gegenüber den beim Fahren und Bremsen auftretenden Beschleunigungs- und Verzögerungskräften ausreichende Lenkerfixierung bei guter Isolierfähigkeit gegenüber den vom Motor oder von der Fahrbahn her in den Gabelkopf eingeleiteten Schwingungen ergibt.

Die Erfindung löst die gestellte Aufgabe dadurch, daß der Haltearm durch eine mit einer elastischen Tülle ausgekleidete Öffnung der oberen Gabelbrücke abwärts greift und unten unter Zwischenlage einer elastischen Hülse od. dgl. an einem mit der oberen Gabelbrücke starr verbundenen Teil befestigt ist.

Durch die Möglichkeit, den Haltearm genügend lang auszubilden, erhält dieser trotz der platzsparenden Anordnung zwei ausreichend weit voneinander entfernte Auflagerstellen, was die in der Tülle und in der elastischen Hülse auftretenden Kräfte sowie die Nachgiebigkeit der Lenkerlagerung reduziert. Die beiden elastischen Elemente können ohne weiteres eine stark progressive Federkennlinie erhalten, was eine besonders gute Schwingungsisolierung bei nur geringer Lenkerbewegungsmöglichkeit in der Befestigung ergibt, so daß der Lenker gegenüber dem Gabelkopf selbst bei extremen Fahrbeanspruchungen lagesicher gehalten und dennoch gedämpft wird. Der Haltearm kann in zwei parallele Arme aufgelöst werden, um bei geringem Materialaufwand eine breite Basis und damit eine noch bessere Lenkerabstützung zu gewährleisten. Der Haltearm kann aber auch einstückig mit einem beispielsweise aus einem Gußteil oder einem Blechformteil bestehenden Lenker ausgebildet oder an diesem angeschweißt sein. Die untere Befestigungsstelle für den Haltearm läßt sich in besonders einfacher Weise unmittelbar am Gabelkopf anordnen, wenn dieser mit der Gabelbrücke einstückig ausgebildet ist. Wenn der Lenker am Auflagestück festgeklemmt wird, müssen die Klemmschrauben sehr exakt mit dem richtigen Drehmoment angezogen werden, um ein unbeabsichtigtes Lösen des Lenkers und damit eine entsprechende Unfallgefahr zu vermeiden. Für den Transport vom Lieferwerk zum Händler ist aber in den meisten Fällen eine Abnahme des Lenkers von Gabelkopf notwendig, worauf die Klemmschrauben der Schelle zur Lenkerbefestigung nicht immer von geschultem Personal mit dem geeigneten Spezialwerkzeug (Drehmomentschlüssel) angezogen wurden, so daß die Einhaltung des richtigen Drehmoments nicht mit der erwünschten Sicherheit gewährleistet war. Die Erfindung gibt die Möglichkeit, den Lenker für den Transport vom Gabelkopf zu lösen, ohne die Schellenschrauben zu betätigen, so daß sichergestellt ist, daß bis zur Endauslieferung des Fahrzeuges die vom Lieferwerk vorgenommene Einstellung der Lenkerklemmung erhalten bleibt.

In weiterer Ausbildung der Erfindung ist an der unteren Befestigungsstelle des Haltearmes zwischen der elastischen Hülse und einer Befestigungsschraube ein als Abstandhalter dienendes, vorzugsweise konisches Druckstück eingesetzt. Durch die Wahl der Abmessungen und der Härte der elastischen Elemente kann die gewünschte Schwingungsisolierung erzielt werden. Da nun das Druckstück als Abstandhalter dient, wird die richtige Einstellung auch nach einem allfälligen Lösen des Lenkers bei der anschließenden Montage automatisch wieder erreicht.

Die Öffnung der oberen Gabelbrücke weist eine von einem Kreis abweichende Form auf und der Haltearm besitzt einen dieser entsprechenden Querschnitt, so daß eine verläßliche Drehmomentübertragung erfolgt.

In der Zeichnung ist der Erfindungsgegenstand in einem Ausführungsbeispiel dargestellt, und zwar zeigen:

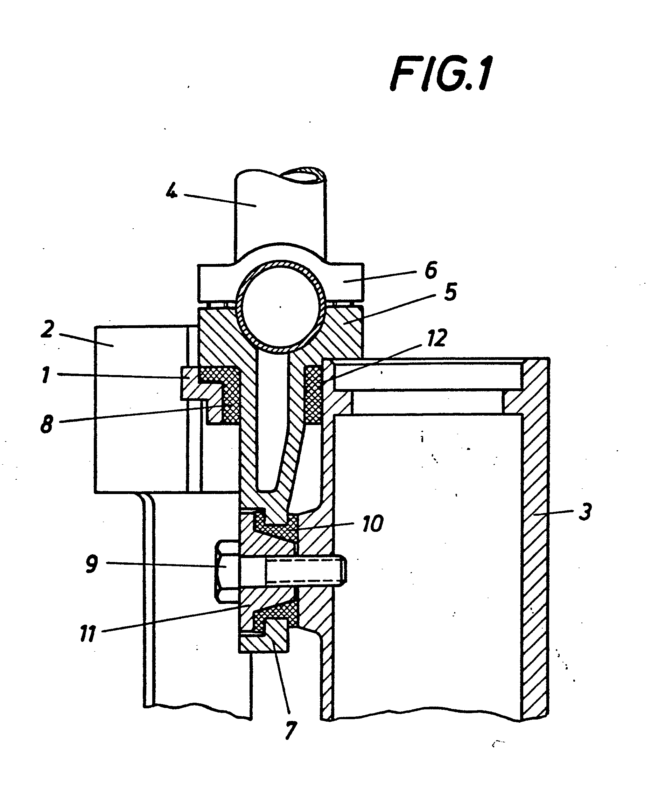

Fig. 1 einen Gabelkopf im Vertikalschnitt nach der Linie I-I der Fig. 3,

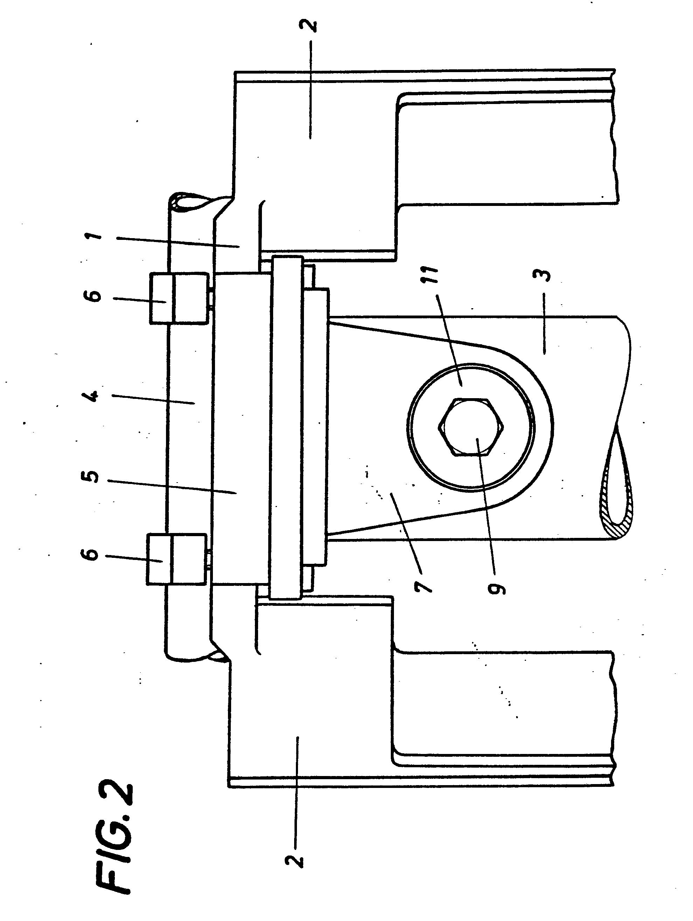

Fig. 2 in Vorderansicht und

Fig. 3 in Draufsicht bei abgenommenem Lenker.

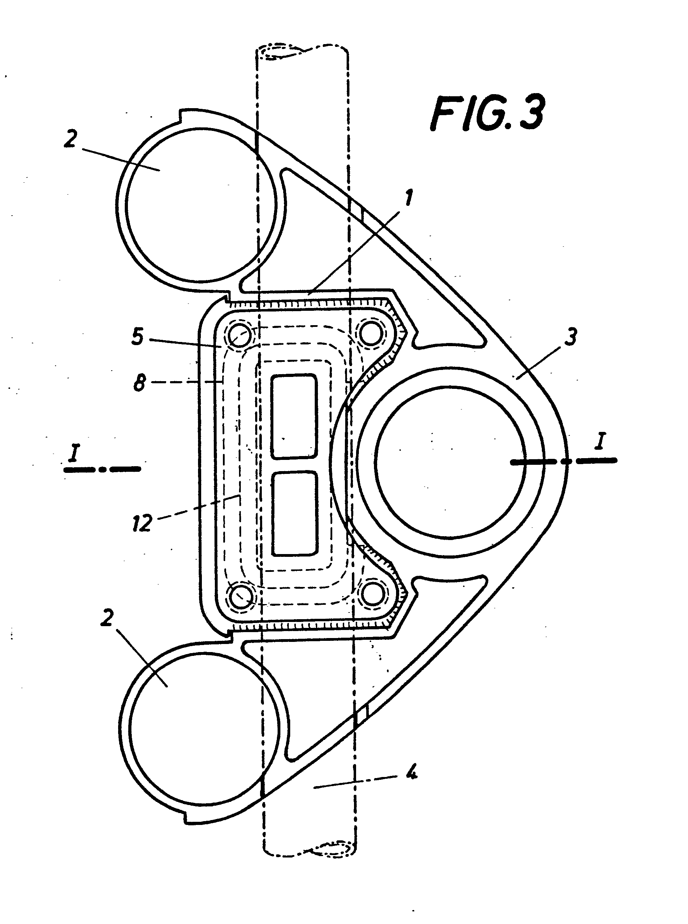

Der Gabelkopf weist zwei durch eine obere Gabelbrücke 1 verbundene Aufnahmen 2 für die Gabelholme auf und bildet als einstückiger Druckgußteil auch eine Lagerhülse 3 für einen aufwärts gerichteten Kragzapfen des Motorradrahmens. Der ganze Gabelkopf kann daher um diesen Kragzapfen hin- und hergeschwenkt werden. Mit 4 ist der Lenker bezeichnet, der an einem Auflagestück 5 mit Schellen 6 befestigt ist. Dieses Auflagestück 5 besitzt einen Haltearm 7, der durch eine mit einer elastischen Tülle 8 ausgekleidete Öffnung 12 der oberen Gabelbrücke 1 abwärts greift und unten mittels einer Schraube 9 an der Lagerhülse 3 angeschraubt ist. Zwischen der Schraube 9 und dem Haltearm 7 ist eine elastische Hülse 10 vorgesehen, und die Schraube 9 trägt ein als Abstandhalter dienendes konisches Druckstück 11. Aus Fig. 3 ist ersichtlich, daß die Öffnung 12 der oberen Gabelbrücke 1 eine annähernd rechteckige Form besitzt, wobei der Haltearm 7 einen dieser Form entsprechenden Querschnitt aufweist.

**Patentansprüche**

1. Befestigungsvorrichtung für die Lenker von Motorrädern od. dgl., bei der der Lenker (4) auf der oberen Gabelbrücke (1) elastisch gelagert ist und der Lenker (4) oder ein Auflagestück (5), an dem der Lenker (4) angeschellt ist, wenigstens einen Haltearm (7) besitzt, dadurch gekennzeichnet, daß der Haltearm (7) durch eine mit einer elastischen Tülle (8) ausgekleidete Öffnung (12) der oberen Gabelbrücke (1) abwärts greift und unten unter Zwischenlage einer elastischen Hülse (10) od. dgl. an einem mit der oberen Gabelbrücke (1) starr verbundenen Teil (3) befestigt ist.

2. Befestigungsvorrichtung nach Anspruch 1, dadurch gekennzeichnet, daß an der unteren Befestigungsstelle des Haltearmes (7) zwischen der elastischen Hülse (10) und einer Befestigungsschraube (9) ein als Abstandhalter dienendes, vorzugsweise konisches Druckstück (11) eingesetzt ist.

3. Befestigungsvorrichtung nach Anspruch 1, dadurch gekennzeichnet, daß die Öffnung (12) der oberen Gabelbrücke (1) eine von einem Kreis abweichende Form aufweist, und der Haltearm (7) einen dieser entsprechenden Querschnitt besitzt.

**Claims**

1. A device for fixing the handlebars of motorcycles or the like, whereby the handlebar (4) is elastically mounted on the upper fork crosspiece (1) and the handlebar (4) or a support (5), to which the handlebar (4) is clipped, comprises at least one retaining arm (7), characterized in that the retaining arm (7) extends downwardly through an opening (12), which is formed in the upper fork crosspiece (1) and lined with an elastic bushing (8), and the lower portion of the retaining arm (7), is secured, with an elastic sleeve (10) or the like interposed, to a member (3), which is rigidly connected to the upper fork crosspiece (1).

2. A fixing device according to claim 1, characterized in that a pressure-applying conical member (11) serving as a spacer is inserted at the lower fixing point of the retaining arm (7) between the elastic sleeve (10) and a fixing screw (9).

3. A fixing device according to claim 1, characterized in that the opening (12) in the upper fork crosspiece (1) is non-circular and the retaining arm (7) has a corresponding cross-section.

**Revendications**

1. Dispositif de fixation pour les guidons de motocycles ou similaires, par lequel le guidon (4) est monté de manière élastique sur la traverse (1) supérieure de la fourche et dans lequel le guidon (4) ou une pièce (5) d'assise, à laquelle le guidon est fixé par collier, possède au moins un bras (7) de retenue, caractérisé par le fait que le bras (7) de retenue vient en prise, orienté vers le bas, à travers un orifice (12) garni d'un manchon (8) élastique et pratiqué dans la traverse (1) supérieure de la fourche, et qu'il est fixé en bas, avec interposition d'une douille (10) élastique ou similaire, à une pièce (3) rigidement solidaire de la traverse (1) supérieure de la fourche.

2. Dispositif de fixation selon la revendication 1, caractérisé par le fait qu'au point inférieur de fixation du bras (7) de retenue est prévue, entre la douille (10) élastique et une vis (9) de fixation, un organe (11) de pression de préférence conique, qui sert de pièce d'écartement.

3. Dispositif de fixation selon la revendication 1, caractérisé par le fait que l'orifice (12) pratiqué dans la traverse (1) supérieure de la fourche présente une forme différente d'un cercle et que le bras (7) de retenue possède une section transversale qui correspond à ladite forme d'orifice.

# FIG.1

3

FIG.2

FIG.3